# EUROPEAN PATENT APPLICATION

(11) **EP 2 733 902 A1**
(43) Date of publication of application: **21.05.2014**
(21) Application number: 12306436.2
(22) Date of filing: 19.11.2012
(51) Int. Cl.: H04L 29/06, H04L 29/08

(54) **Method and apparatus for setting up a telecommunication session between a first terminal and a second terminal**

(71) Applicant: Alcatel Lucent, 75007 Paris (FR)
(72) Inventor: Verbiest, Willem, 9170 Sint-Gillis-Waas (BE); Franken, Gerwin, 2275 AC Voorburg (NL)
(74) Representative: D'Halleweyn, Nele Veerle Trees Gertrudis

(57) **Abstract**

A method for setting up a telecommunication session between a first terminal (210) attached to a first service provider network (220) and a second terminal (250) attached to a second service provider network (270) and an IP network (240), said method comprising at an intermediate node (230) intercepting a call set-up message from said first terminal (210); deriving an identity of said second terminal (250) from said call set-up message; obtaining application registration information pertaining to said second terminal (250) from a database using said identity; if said application registration information is indicative of a presence of a predetermined application at said second terminal (250), setting up said telecommunication session as an OTT VoIP session with said application over said IP network; and if said application registration information is not indicative of said presence, setting up said telecommunication session as a conventional TDM call.

## Description

### Field of the Invention

The present invention relates to the field of telecommunications, and in particular to the field of telecommunication sessions across service provider network boundaries.

### Background

Telecommunication sessions across service provider network boundaries are notoriously expensive, due to the occurrence of interconnection costs and roaming costs that arise when a user needs to use a network of which he is not a subscriber.

Existing Over-the-Top Voice-over-IP applications (hereinafter referred to as OTT VoIP apps) allow cheap telephone calls, but these applications require that the user originating the call is aware of the application(s) available to the target user. Exemplary OTT VoIP apps include GoogleTalk, Facetime, VIBER, and Skype.

### Summary

It is a purpose of embodiments of the present invention, to overcome one or more of the above problems.

According to an aspect of the invention, there is provided a method for setting up a telecommunication session between a first terminal attached to a first service provider network and a second terminal attached to a second service provider network and an IP network, the method comprising at an intermediate node: intercepting a call set-up message from the first terminal; deriving an identity of the second terminal from the call set-up message; obtaining application registration information pertaining to the second terminal from a database using the identity; if the application registration information is indicative of a presence of a predetermined application at the second terminal, setting up the telecommunication session as an OTT VoIP session with the application over the IP network; and if the application registration information is not indicative of the presence, setting up the telecommunication session as a conventional TDM call.

The invention is based *inter alia* on the insight of the inventors that the knowledge about the existence of an appropriate OTT VoIP app can be delegated to the network, and that a roaming/interconnection costs can thus be avoided on a case-by-case basis, whenever the required app is available. The invention is further based on the insight of the inventors that it is most convenient for the originating user if she does not need to know whether the call is terminated at the target terminal by means of the OTT VoIP app or by means of conventional telephony means; and if she can simply use a conventional telephone number to address the target user.

The term "identity" is used to denote a unique identifier of the target of the session under attempt. It is preferably a telephone number, e.g. a number in accordance with ITU-T Recommendation E.164. This identity is preferably used to index the entries in the database, which indicate, for each registered device, whether that device has the predetermined OTT VoIP app installed.

In an embodiment, the method according to the present invention further comprises receiving a list of correspondents from the second terminal; and storing application registration information pertaining said second terminal and optionally terminals of the correspondents in the database.

The exchange of the list of correspondents preferably takes place upon installation of the predetermined OTT VoIP app on the second terminal. It is an advantage of this embodiment that, as the app is spread, knowledge about which terminals are equipped with the app is stored in the appropriate databases.

In an embodiment of the method according to the present invention, the telecommunication session is a voice communication session.

In an embodiment of the method according to the present invention, the telecommunication session is a video communication session.

In an embodiment, the method according to the present invention further comprises verifying if said second terminal is in a different service provider network than said intermediate node, and only setting up said telecommunication session as an OTT VoIP session if said verifying is positive.

In an embodiment, the method according to the present invention further comprises verifying if use of said predetermined OTT VoIP app is allowed for said first terminal and said second terminal according to a policy, and only setting up said telecommunication session as an OTT VoIP session if said verifying is positive.

According to an aspect of the present invention, there is provided a computer program comprising software means configured to perform, when executed, the method described above.

According to an aspect of the present invention, there is provided an apparatus for setting up a telecommunication session between a first terminal attached to a first service provider network and a second terminal attached to a second service provider network and an IP network, the apparatus comprising:
- a first interface, configured to connect to the first service provider network;
- a second interface, configured to connect to the IP network;
- a processor, operatively connected to the first interface and the second interface, the processor being configured to:
- intercept a call set-up message from the first terminal;
- derive an identity of the second terminal from the call set-up message;
- obtain application registration information pertaining to the second terminal from a database using the identity;
- if the application registration information is indicative of a presence of a predetermined application at the second terminal, setting up the telecommunication session as an OTT VoIP session with the application over the IP network; and
- if the application registration information is not indicative of the presence, setting up the telecommunication session as a conventional TDM call.

The apparatus according to embodiments the present invention may serve as the "intermediate node" recited in the method according to the present invention. It is preferably a gateway, such as a SIP gateway, which participates in the setting up of telecommunication sessions. If a call is set up terminating in the OTT VoIP app of the second terminal, the apparatus remains in the data path, converting and relaying the call content between the (typically TDM-based) first service provider network and the IP network to which the second terminal is attached.

In an embodiment of the apparatus according to the present invention, the obtaining the application registration information comprises querying the database via the IP interface.

In this embodiment, the apparatus need not be equipped with storage means. The database may be stored at a different node, which is accessible via the IP network. Such a database may be shared between a plurality of apparatus according to the invention.

In an embodiment, the apparatus according to the present invention comprises the database, and obtaining the application registration information comprises querying the database via an internal interface.

This embodiment allows for a faster response of the apparatus, when setting up the requested telecommunication setting.

The technical effects and advantages of the computer program and the apparatus according to embodiments of the present invention correspond, *mutatis mutandis,* to those of the corresponding methods according to embodiments of the present invention.

### Brief Description of the Figures

Some embodiments of apparatus and/or methods in accordance with embodiments of the present invention are now described, by way of example only, and with reference to the accompanying drawings, in which:
Figure 1 presents a flow chart of a method according to an embodiment according to the present invention;
Figure 2 illustrates an exemplary network in which the present invention may be applied; and
Figure 3 is a schematic illustration of an apparatus according to an embodiment of the present invention.

### Description of Embodiments

From a functional point of view, embodiments of the present invention overcome some of the aforementioned problems by providing an OTT VoIP app under control of the service provider. Provisioning of this app is preferably user-driven, wherein the network - an intermediate node, which acts as an embodiment of the apparatus according to the present invention - keeps track of the availability of the app among potential target subscribers. When an originating user attempts to set up a call that would involve a cross-domain interconnectivity (roaming, or interconnection), the app is used instead. Thus, service provider fees associated with roaming or network interconnection are avoided. It is preferably checked in advance whether the target subscriber is (a) equipped with the app, (b) connected to the relevant data (IP) network, and /or (c) allowed to use the app in the given circumstances according to an applicable usage policy.

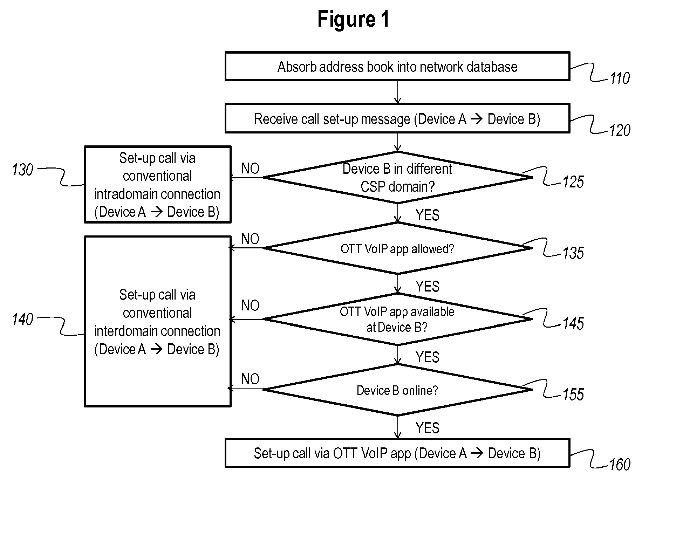

An exemplary embodiment of the method according to the present invention will now be described with reference to Figure 1, as applied to an exemplary first terminal (Device A) and second terminal (Device B). The first terminal is assumed in a first (originating) communication service provider network (CSPo), while the second terminal is assumed to be in a second (receiving) communication service provider network (CSPr). This exemplary embodiment may consist of the following steps:
i) In an optional first step **110,** when installing the OTT VoIP App on Device B, the App "sponges" the address book of Device B, and send username and (E.164) telephone numbers to the CSPo backend-database. The address book of Device B typically contains contact information, in particular telephone numbers, of people that regularly communicate with Device B (e.g., friends, family members, business contacts), and that would benefit from using the app when the circumstances permit it. The address book entries of Device B may contain indications whether it is permitted for the respective contacts to call Device B via the OTT VoIP App or not. The telephone number is used for identification of the customers, and the database keeps track who has the OTT VoIP App installed.
ii) when a user on Device A sets up a communication with Device B, it sends out a call set-up message **120,** received by an intermediate node, whereupon the following process may be used:
   i) check **125** if Device B is in another CSPs domain (if so, connection or roaming costs would need to be paid).
   ii) if so, check **135** if the communication is applicable for the new mode (e.g. based on policy etc.)
   iii) if so, check **145** (in the database) if Device B has the OTT VoIP App installed.
   iv) if so, check **155** if the Device B has data connectivity at the given moment.
   v) if so, set up the communication **160** as follows:
      - Using the regular (e.g. TDM) communication technique between Device A and the intermediate node
      - Using OTT VoIP technology between the intermediate node and the Device B

The intermediate node performs all necessary transformations. In this way, interconnection or roaming costs are avoided.

If any of the aforementioned checks **125, 135, 145, 155** (or any of the checks described hereinafter, when applicable) fail, communication is set up using traditional (e.g. TDM) means **130.**

In an embodiment, the intermediate node obtains connection cost information from Device B, and decides to use the OTT VoIP app only if the reported connection cost meets a predetermined criterion. In this manner, it can be avoided to activate the OTT VoIP app in situations where this would actually turn out to be more expensive than using the traditional network.

In an embodiment, the intermediate node verifies whether Device B has permitted Device A to contact it using the OTT VoIP App (as indicated by a corresponding entry in the address book of Device B). Device B may further indicate that callers who are not in its address book may or may not contact it using the OTT VoIP App as a general rule to be applied by the intermediate node.

In addition to the aforementioned verifications, different technical parameters may be taken into account to decide whether the targeted communication is set up via the OTT VoIP app or via traditional means.

Preferably, the intermediate node obtains power level information from Device B, and decides to use the OTT VoIP app only if the power level exceeds a predetermined minimum. The predetermined minimum may be a fixed system setting, or it may be provided by Device A in the call setup message. The desired and the actual power level information may for instance be in the form of a relative number (percentage of full battery level), but it is most preferably in the form of an estimated autonomy, i.e. an indication of the amount of time during which Device B is estimated to continue to operate (in OTT VoIP call conditions) without failing due to battery constraints. The power level information is preferably structured in such a way that it can also correctly reflect the fact that Device B is being powered via an external power source, when this is the case.

Preferably, the intermediate node obtains connection quality information from Device B, and decides to use the OTT VoIP app only if the connection quality level meets a predetermined criterion. The connection quality information may for example include one or more of a wireless signal strength, a bit rate, a packet loss rate, and a selected communication standard (e.g. IEEE 802.11a/b/g/n, EDGE, 3G, ...). The predetermined criterion may be a fixed system setting, or it may be provided by Device A in the call setup message. The predetermined criterion may vary depending on whether the attempted call is a voice-only or a video call.

Accordingly, in an exemplary embodiment, the intermediate node decides to use the OTT VoIP app only if Device B reports that it has connectivity according to the IEEE 802.11b/g/n standard at a data rate of at least 1 Mb/s, and battery autonomy of at least 30 minutes.

Device B may comprise a GPS unit, and be configured to report its position and optionally a movement vector to the intermediate device. The intermediate node may be configured to decide to use the OTT VoIP app only if Device B is at a particular place or in a particular region, optionally in combination with a movement criterion. This decision is made using the reported position and optional movement vector. Additionally or alternatively, the intermediate node may be configured to decide to use the OTT VoIP app only during certain times of the day or week (e.g., the times at which the traditional carriers charge their peak hour rates).
iii) when a user on Device B sets up a communication with DeviceA, the following process is used:
   i) to set up the communication, Device B uses the OTT VoIP App
   ii) check if Device B has data connectivity
   iii) if so, check if the communication is applicable for the new mode (e.g. based on policy etc.)
   iv) if so, set up the communication as follows:
      - Using the regular (e.g. TDM) communication technique between Device A and intermediate node
      - Using OTT VoIP technology between the intermediate node and the Device B

The intermediate node performs all necessary transformations. In this way, interconnection or roaming costs are avoided.

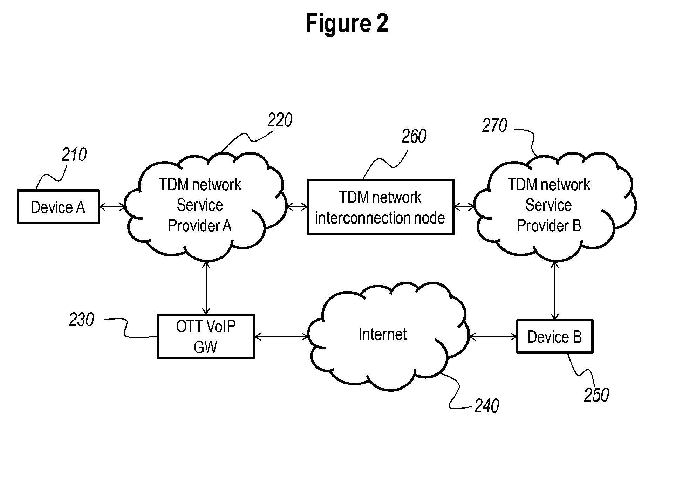

Hence, the preferred result of the above described exemplary algorithm, can be described with reference to Figure 2 as a communication session between a first terminal **210** (Terminal A) attached to a first service provider network **220,** in which an OTT VoIP gateway **230** is provided. The OTT VoIP gateway **230** relays the call via an IP network **240** to the second terminal **250** (Terminal B). In doing so, the use of the conventional interconnection gateway **260** between the two distinct service provider networks **220/270,** and the associated interconnection costs, are avoided.

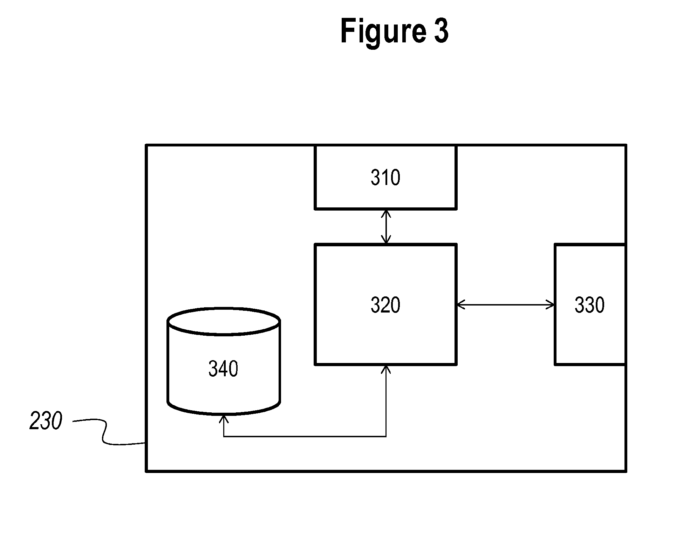

An exemplary implementation of the OTT VoIP gateway **230** is schematically illustrated in Figure 3.

The OTT VoIP gateway **230** illustrated in Figure 3 comprises a a first interface **310,** configured to connect to the first service provider network **220.** The apparatus **230** further comprises a second interface **330,** configured to connect to the IP network **240.**

The term "interface" designates the necessary hardware and software required to establish data communication connectivity across the various layers of the protocol stack, as is well known to a person skilled in the art. Preferably, standardized TDM (STM) based or packet (IP/Ethernet) based protocols are used. A LAN interface may for instance include an interface for an IEEE 802.3 "Ethernet" link.

The apparatus further comprises a processor **320,** operatively connected to the first interface **310** and the second interface **330,** the processor **320** being configured to:
- intercept a call set-up message from the first terminal **210;**
- derive an identity of the second terminal **250** from said call set-up message;
- obtain application registration information pertaining to the second terminal **250** from the database **340** using the identity;
- if the application registration information is indicative of a presence of a predetermined application at the second terminal **250,** set up the telecommunication session as an OTT VoIP session with said application over the IP network; and
- if the application registration information is not indicative of such presence, set up the telecommunication session as a conventional TDM call.

The database **340** may be implemented, as in the case illustrated, as an integrated storage device (preferably non-volatile memory, such as a flash memory device or a hard disk drive). In an alternative (not illustrated), the database is stored in an external storage component (preferably a NAS or SAN component).

Although methods and apparatus have been described hereinabove as separate embodiments, this is done for clarity purposes only, and it should be noted that features described only in connection with method embodiments may be applied in the apparatus according to the present invention to obtain the same technical effects and advantages, and vice versa.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for setting up a telecommunication session between a first terminal attached to a first service provider network and a second terminal attached to a second service provider network and an IP network,
said method comprising at an intermediate node:
- intercepting a call set-up message from said first terminal;
- deriving an identity of said second terminal from said call set-up message;
- obtaining application registration information pertaining to said second terminal from a database using said identity;
- if said application registration information is indicative of a presence of a predetermined application at said second terminal, setting up said telecommunication session as an OTT VoIP session with said application over said IP network;
and
- if said application registration information is not indicative of said presence, setting up said telecommunication session as a conventional TDM call.

2. The method according to claim 1, further comprising receiving a list of correspondents from said second terminal; and
storing application registration information pertaining to said second terminal and optionally terminals of said correspondents in said database.

3. The method according to claim 1 or claim 2, wherein said telecommunication session is a voice communication session.

4. The method according to claim 1 or claim 2, wherein said telecommunication session is a video communication session.

5. The method according to any of the preceding claims, further comprising verifying if said second terminal is in a different service provider network than said intermediate node, and only setting up said telecommunication session as an OTT VoIP session if said verifying is positive.

6. The method according to any of the preceding claims, further comprising verifying if use of said predetermined OTT VoIP app is allowed for said first terminal and said second terminal according to a policy, and only setting up said telecommunication session as an OTT VoIP session if said verifying is positive.

7. A computer program comprising software means configured to perform, when executed, the method of any of the preceding claims.

8. An apparatus for setting up a telecommunication session between a first terminal attached to a first service provider network and a second terminal attached to a second service provider network and an IP network, said apparatus comprising:
- a first interface, configured to connect to said first service provider network;
- a second interface, configured to connect to said IP network;
- a processor, operatively connected to said first interface and said second interface, said processor being configured to:
- intercept a call set-up message from said first terminal;
- derive an identity of said second terminal from said call set-up message;
- obtain application registration information pertaining to said second terminal from a database using said identity;
- if said application registration information is indicative of a presence of a predetermined application at said second terminal, set up said telecommunication session as an OTT VoIP session with said application over said IP network; and
- if said application registration information is not indicative of said presence, set up said telecommunication session as a conventional TDM call.

9. The apparatus according to claim 8, wherein said obtaining said application registration information comprises querying said database via said IP interface.

10. The apparatus according to claim 8, further comprising said database, wherein said obtaining said application registration information comprises querying said database via an internal interface.
